# EUROPÄISCHE PATENTSCHRIFT

(11) **EP 3 440 969 B1**
(45) Veröffentlichungstag und Bekanntmachung des Hinweises auf die Patenterteilung: **07.09.2022**
(21) Anmeldenummer: 18185823.4
(22) Anmeldetag: 26.07.2018
(51) Int. Cl.: A47J 31/44, G01F 23/292

(54) **HEISSGETRÄNKEZUBEREITUNGSVORRICHTUNG**
HOT BEVERAGE PREPARATION DEVICE
DISPOSITIF DE PRÉPARATION DE BOISSONS CHAUDES

(30) Priorität: 10.08.2017 DE 102017214006
(43) Veröffentlichungstag der Anmeldung: 13.02.2019
(73) Patentinhaber: BSH Hausgeräte GmbH, 81739 München (DE)
(72) Erfinder: Haslacher, Christian, 5303 Thalgau (AT); Reichel, Thomas, 83278 Traunstein (DE); Stadler, Georg, 5101 Bergheim b. Salzburg (AT)

(56) Entgegenhaltungen:
- EP-A1- 1 943 930
- EP-A1- 2 228 633
- WO-A2-2014/003570
- DE-A1- 10 201 768
- DE-U1-202008 016 449
- DE-U1-202010 010 770

## Beschreibung

Die vorliegende Erfindung betrifft eine Heißgetränkezubereitungsvorrichtung, insbesondere einen Kaffeevollautomaten, mit einem Flüssigkeitsbehälter und mit einer Füllstandsanzeige.

Heißgetränkezubereitungsvorrichtungen zur Zubereitung heißer Getränke, insbesondere von Kaffee oder Cappuccino, wie beispielsweise Kaffeevollautomaten, sind bekannt. Bekannte Heißgetränkezubereitungsvorrichtungen weisen zum Erfassen eines Füllstands eines Flüssigkeitsbehälters beispielsweise einen Schwimmer auf. Dieser kann jedoch fehleranfällig sein, beispielsweise wenn der Schwimmer im Laufe des Gebrauchs zum Taucher mutiert. Kaffeeautomaten, bei denen die Auswertung z.B. eines Füllstands durch Sensoren erfolgt, sind aus der EP 1 943 930 A1 und der WO 2014/003570 A2 bekannt.

Alternativ ist bekannt, die Wassermenge der Heißgetränkezubereitungsvorrichtung durch eine Software abzuschätzen. Diese Schätzung ist jedoch ebenfalls fehleranfällig. Beispielsweise wird nicht erkannt, wenn ein Kunde den Flüssigkeitsbehälter nur teilweise befüllt, womit dadurch bedingt die Meldung eines leeren Flüssigkeitsbehälters zu spät erfolgt.

Zur Visualisierung eines Flüssigkeitsstands ist bisher eine Flüssigkeitsbehälterbeleuchtung bekannt, die an einer Unterseite des Flüssigkeitsbehälters Licht einstrahlt. Dieses Licht durchdringt die Flüssigkeit, beispielsweise Wasser oder Milch, und ist im Wesentlichen für den Kunden nur an Verunreinigungen in der Flüssigkeit wie beispielsweise Schwebstoffe oder Luftblasen, an dem Flüssigkeitsbehälter selbst und/oder am Übergang von der Flüssigkeit zu Luft sichtbar.

Beispielsweise beschreibt die EP 2 898 804 A1 einen Getränkeautomat mit einer Füllstandsanzeige, bei dem eine Wand eines Vorratsbehälters in einem geöffneten Zustand des Getränkeautomats von Leuchtmitteln durchleuchtet wird. Ein Behälter mit einer Lichtquelle zum Anzeigen eines Füllstands ist aus der DE 20 2008 016 449 U1 bekannt.

Weiter offenbart die EP 2 628 421 A1 eine Milcherkennung, die auf einem optischen Sensor basiert, der eine Änderung der Transmission, Streuung und/oder Reflexion bestimmt, um zwischen der Förderung von Milch und von Luft zu unterscheiden.

Aus der EP 3 026 404 A2 ist dem Fachmann eine Vorrichtung zum Erfassen eines Inhalts einer Flüssigkeit bekannt, die auf einem von einer Reflexionslichtschranke ausgesendeten Strahl und einem diesen Strahl empfangenden Sensor basiert.

Alternative Lösungen zur Visualisierung eines Flüssigkeitsstands einer Flüssigkeit in einem Behälter sind, diesen transparent und damit einsehbar auszugestalten und/oder ein Sichtfenster im Behälter anzuordnen, um einen Blick auf den Flüssigkeitsstand freizugeben.

Aufgabe der vorliegenden Erfindung ist es, eine Heißgetränkezubereitungsvorrichtung anzugeben, die sich durch eine benutzerfreundliche und insbesondere zuverlässliche Füllstandsanzeige zum Anzeigen des Füllstands im Flüssigkeitsbehälter auszeichnet, wobei sich insgesamt die Fehleranfälligkeit bezüglich Fehlinformationen reduziert.

Diese Aufgabe wird durch eine Heißgetränkezubereitungsvorrichtung mit den Merkmalen des Anspruchs 1 gelöst. Vorteilhafte Weiterbildungen der Erfindung sind Gegenstand der Unteransprüche.

Erfindungsgemäß weist eine Heißgetränkezubereitungsvorrichtung, insbesondere ein Kaffeevollautomat, zumindest einen Flüssigkeitsbehälter und eine Füllstandsanzeige zum Anzeigen des Füllstands im Flüssigkeitsbehälter auf. Die Füllstandsanzeige umfasst zumindest eine Lichtquelle, die geeignet ist, Strahlung einer gewünschten Wellenlänge auszusenden. Zudem weist die Füllstandsanzeige einen Anzeigebereich auf, zu dem bei vorhandener Flüssigkeit im Flüssigkeitsbehälter die ausgesendete Strahlung hin leitbar ist, und von der bei fehlender Flüssigkeit im Flüssigkeitsbehälter die ausgesendete Strahlung weg leitbar ist. Das hin-Leiten beziehungsweise weg-Leiten der Strahlung basiert auf unterschiedlichen Brechungsindizes von der Flüssigkeit und von Luft.

Durch eine derartige Füllstandsanzeige ist mit Vorteil eine sehr präzise und anschauliche, insbesondere fehlerunauffällige Anzeige des Füllstands möglich. Dies basiert insbesondere darauf, dass ein speziell für die Anzeige des Füllstands vorgesehener Bereich des Flüssigkeitsbehälters ausgeleuchtet wird.

Zudem ist das Auswerten der Flüssigkeitsanzeige einfach und benutzerfreundlich, da der Benutzer/Anwender lediglich, erfindungsgemäß mit bloßem Auge, den dafür vorgesehenen Bereich betrachten und den Flüssigkeitsstand entsprechend abliest. Eine zuverlässige, fehlerminimierte Füllstandsanzeige zum Anzeigen des Füllstands im Flüssigkeitsbehälter ergibt sich so mit Vorteil. Das Risiko von Fehlinformationen ist dabei minimal.

Unter einer Heißgetränkezubereitungsvorrichtung ist insbesondere ein Getränkeausgebender Automat zu verstehen, der geeignet ist, auf Knopfdruck Heißgetränke bereitzustellen. Beispielsweise ist die Heißgetränkezubereitungsvorrichtung ein Kaffeevollautomat oder ein Einbau-Kaffeevollautomat.

Unter einem Flüssigkeitsbehälter ist insbesondere ein Behälter der Heißgetränkezubereitungsvorrichtung zu verstehen, der dafür vorgesehen ist, Flüssigkeit wie beispielsweise Wasser oder Milch aufzunehmen und bei der Heißgetränkezubereitung auszugeben. Hierfür ist der Flüssigkeitsbehälter insbesondere von der Heißgetränkezubereitungsvorrichtung abnehmbar ausgebildet, damit der Kunde manuell Wasser oder Milch in den Flüssigkeitsbehälter einfüllen kann. Beispielsweise ist der Flüssigkeitsbehälter ein Wassertank, ein Milchtank oder ein Tank für Sirup oder Getränkekonzentrat.

Unter einer Füllstandsanzeige ist insbesondere jegliche Anzeige zu verstehen, die zum Anzeigen des Füllstands im Flüssigkeitsbehälter geeignet ist. Vorteilhafterweise ist die Füllstandsanzeige in dem Flüssigkeitsbehälter integriert. Beispielsweise umfasst die Füllstandsanzeige einen für die von der Lichtquelle emittierte Strahlung teiltransparenten, insbesondere vollständig transparenten Bereich des Flüssigkeitsbehälters, den sogenannten Anzeigebereich, der vorzugsweise eine Skala zum Ablesen des Füllstands aufweist.

Unter der Lichtquelle ist insbesondere jegliche Strahlung-emittierende Quelle zu verstehen, die geeignet ist, Strahlung einer gewünschten Wellenlänge auszusenden. Beispielsweise ist die Lichtquelle eine LED (Licht emittierende Diode), eine RGB-LED oder eine RGB(W)-LED. Selbstverständlich kann auch jede andere handelsübliche Lichtquelle Verwendung finden.

Durch die Lichtquelle wird zudem erfindungsgemäß eine zusätzliche Information vermittelt, beispielsweise durch eine zusätzliche Lichtfarbe und/oder pulsierendes Licht. Als zusätzliche Information können beispielsweise der Kalkgehalt und/oder die Temperatur der Flüssigkeit und jegliche weitere für den Benutzer relevante Information die Flüssigkeit betreffend in Frage kommen. Zudem können so Informationen über diverse Gerätezustände oder technische Informationen die einzelnen Komponenten der Heißgetränkezubereitungsvorrichtung betreffend dem Benutzer angezeigt beziehungsweise insbesondere (ausschließlich) optisch vermittelt werden.

Weiter dient der illuminierte Flüssigkeitsbehälter zudem mit Vorteil zur optischen Aufwertung der Heißgetränkezubereitungsvorrichtung.

Die von der Füllstandsanzeige verwendete Strahlung ist dafür geeignet, zumindest den Füllstand des Flüssigkeitsbehälters zu erfassen. Hierfür findet Strahlung mit einem geeigneten elektromagnetischen Spektrum Verwendung.

Unter dem Anzeigebereich ist der Bereich der Füllstandsanzeige zu verstehen, an dem der Benutzer/Anwender den Füllstand des Flüssigkeitsbehälters ablesen kann. Vorzugsweise ist der Anzeigebereich dabei für die von der Lichtquelle emittierte Strahlung transparent beziehungsweise strahlungsteildurchlässig oder strahlungsdurchlässig ausgebildet.

Unter einem transparenten Anzeigebereich ist insbesondere ein begrenzter Bereich des Flüssigkeitsbehälters zu verstehen, der für die von der Lichtquelle ausgesendete Strahlung weitestgehend strahlungsdurchlässig ist. Insbesondere ist der transparente Anzeigebereich mehr als 60%, bevorzugt mehr als 80%, besonders bevorzugt mehr als 90% für diese Strahlung durchlässig.

Zum Leiten der Strahlung im oder am Flüssigkeitsbehälter findet insbesondere ein Lichtleitsystem Verwendung. Dieses ist dafür vorgesehen, basierend auf Brechungsindex-Unterschieden, die von der Lichtquelle emittierte Strahlung bei vorhandener Flüssigkeit im Flüssigkeitsbehälter zu dem Anzeigebereich hin zu leiten, und entsprechend bei fehlender Flüssigkeit im Flüssigkeitsbehälter - also bei Luft im Flüssigkeitsbehälter - die Strahlung von dem Anzeigebereich weg zu leiten beziehungsweise zu reflektieren.

Die vorliegende Erfindung macht sich also die unterschiedlichen Brechungsindizes von transparenten Materialien, insbesondere Wasser und Luft zunutze. Hierbei wird die geometrische Form des Flüssigkeitsbehälters, insbesondere bei einem Austritt der Strahlung zur Innenseite des Flüssigkeitsbehälters hin, derart gewählt, dass die Strahlung beziehungsweise das Licht bei Eintritt in die Flüssigkeit des Flüssigkeitsbehälters in einem Winkel beziehungsweise eine Richtung entsprechend dem Brechungsgesetz abgelenkt, beim Eintritt in Luft in einem anderen Winkel beziehungsweise in eine andere Richtung abgelenkt oder vorteilhafterweise vollständig reflektiert wird.

Das reflektierte Licht wird dabei vorteilhafterweise in einen Bereich des Flüssigkeitsbehälters geleitet, der für den Benutzer/Anwender von außen nicht einsehbar ist. Beim Übertritt des Lichts von Wasser in den Flüssigkeitsbehälter dagegen wird das Licht in den Anzeigebereich geleitet, der für den Benutzer/Anwender einsehbar, ablesbar und/oder insbesondere sichtbar angebracht ist.

Erfindungsgemäß ist der Anzeigebereich, insbesondere das Anzeigen des Füllstands im Flüssigkeitsbehälter sensorlos betreibbar.

Unter sensorlos ist insbesondere zu verstehen, dass zum Anzeigen des Füllstands kein Sensor notwendig ist. Die Füllstandsanzeige beziehungsweise der Anzeigebereich ist also ohne jeglichen Sensor betreibbar. Zur Auswertung findet lediglich das bloße Auge des Betrachters beziehungsweise Benutzers/Anwenders Verwendung. Dadurch ermöglicht sich mit Vorteil eine fehlerminimierte Auswertung der Füllstandsanzeige, da die Fehleranfälligkeit eines Sensors vorliegend wegfällt.

Bei einer weiteren vorteilhaften Weiterbildung der Erfindung basiert das Anzeigen des Füllstands im Flüssigkeitsbehälter auf einem ausschließlich optischen Verfahren. Insbesondere findet hierfür ein Lichtleitsystem und zum Auswerten ein bloßes Anschauen Verwendung. Weitere technische Verfahren, wie beispielsweise Sensoren, die die Transmission der ausgesendeten Strahlung messen, oder ähnliches, ist mit Vorteil nicht notwendig, womit sich insgesamt aufgrund der geringeren verwendeten technischen Komponenten die Fehleranfälligkeit reduziert.

Bei einer weiteren vorteilhaften Weiterbildung der Erfindung tritt die von der Lichtquelle ausgesendete Strahlung in ein Material des Flüssigkeitsbehälters ein, wobei die Strahlung bei einem Übergang von dem Material des Flüssigkeitsbehälters zur Flüssigkeit und entsprechend zu Luft entsprechend des jeweiligen Brechungsindex vorbestimmt unterschiedlich brechbar ist. Insbesondere wird Strahlung von der Lichtquelle ausgesendet und in den Flüssigkeitsbehälter eingeleitet. Am Austritt der Strahlung zur Innenseite des Flüssigkeitsbehälters ist der Brechungswinkel der Strahlung derart gewählt, dass die Strahlung beim Eintritt in die Flüssigkeit entsprechend dem Brechungsgesetz zum Anzeigebereich hin abgelenkt, beim Eintritt in Luft jedoch in eine andere Richtung abgelenkt beziehungsweise gänzlich reflektiert wird, insbesondere in einen Bereich, der für den Benutzer nicht einsehbar ist.

Bei einer weiteren vorteilhaften Weiterbildung der Erfindung wird also bei dem Übergang von dem Material des Flüssigkeitsbehälters zur Flüssigkeit die Strahlung zum Anzeigebereich oder zu einem zum Anzeigebereich führenden Lichtleitsystem hin gebrochen wird. Bei dem Übergang von dem Material des Flüssigkeitsbehälters zu Luft dagegen wird die Strahlung bevorzugt vom Anzeigebereich weg gebrochen und/oder vollständig reflektiert.

Dabei ist vorzugsweise der Anzeigebereich für den Anwender zur Auswertung sichtbar und/oder einsehbar. Der Anwender/Benutzer kann also mit Vorteil direkt am Anzeigebereich den Füllstand der Flüssigkeit ablesen und entsprechend darauf reagieren.

Bei einer weiteren vorteilhaften Weiterbildung der Erfindung gibt die zumindest eine Lichtquelle ihre Strahlung direkt und/oder unmittelbar in den Flüssigkeitsbehälter ab. Bei dieser Ausführungsform wird die Strahlung also nicht über einen Lichtleiter in den Flüssigkeitsbehälter abgegeben, sondern der Flüssigkeitsbehälter an sich dient bereits als Lichtleitsystem. Eine platzsparende und insbesondere kostengünstige Füllstandsanzeige ermöglicht sich so mit Vorteil.

Bei einer alternativen vorteilhaften Weiterbildung der Erfindung gibt die zumindest eine Lichtquelle ihre Strahlung indirekt über einen Lichtleiter in den Flüssigkeitsbehälter ab. Bei dieser Ausführungsform findet also ein Lichtleiter Verwendung, um die von der Lichtquelle emittierte Strahlung möglichst präzise zu führen beziehungsweise zu leiten. Die von der Lichtquelle emittierte Strahlung wird in einen Lichtleiter eingekoppelt, der diese eingekoppelte Strahlung wie vorgesehen oder erwünscht möglichst präzise und insbesondere gleichmäßig an den Flüssigkeitsbehälter abgibt.

Bei einer weiteren vorteilhaften Weiterbildung der Erfindung weisen der Lichtleiter und/oder der Flüssigkeitsbehälter zumindest bereichsweise eine Sägezahngeometrie auf. Durch diese Sägezahngeometrie ergibt sich mit Vorteil eine möglichst gleichmäßige Einkopplung der Strahlung in den dafür vorgesehenen Bereich, beispielsweise den Lichtleiter und/oder den Flüssigkeitsbehälter. Eine möglichst genaue und exakte Auswertung des Füllstands ermöglicht sich so mit Vorteil.

Bei einer weiteren vorteilhaften Weiterbildung der Erfindung findet eine Mehrzahl von Lichtquellen Verwendung, die jeweils eine gewünschte Strahlung emittieren und insbesondere in den Flüssigkeitsbehälter direkt und/oder indirekt einstrahlen. Die Lichtquellen können dabei vorzugsweise lateral neben dem Flüssigkeitsbehälter angeordnet sein. Bevorzugt sind die Lichtquellen vertikal versetzt am Flüssigkeitsbehälter angebracht. Dadurch ermöglicht sich eine gleichmäßige und präzise Einkopplung der Strahlung in den Flüssigkeitsbehälter.

Weitere Vorteile, vorteilhafte Ausführungsformen und Weiterbildungen der Heißgetränkezubereitungsvorrichtung ergeben sich aus den im Folgenden in Verbindung mit den Figuren 1 bis 5 beschriebenen Ausführungsformen. Es zeigen
- Figur 1: einen schematischen Aufbau eines Ausführungsbeispiels einer erfindungsgemäßen Heißgetränkezubereitungsvorrichtung,
- Figuren 2A-2C: jeweils einen schematischen Ausschnitt aus einem Flüssigkeitsbehälter eines Ausführungsbeispiels einer erfindungsgemäßen Heißgetränkezubereitungsvorrichtung,

- Figuren 3A - 3C: jeweils einen schematischen Ausschnitt aus einem Flüssigkeitsbehälter eines Ausführungsbeispiels einer erfindungsgemäßen Heißgetränkezubereitungsvorrichtung,
- Figuren 4A, 4B: jeweils einen schematischen Ausschnitt aus einem Flüssigkeitsbehälter eines Ausführungsbeispiels einer erfindungsgemäßen Heißgetränkezubereitungsvorrichtung, und
- Figuren 5A, 5B: jeweils einen schematischen Ausschnitt aus einem Flüssigkeitsbehälter eines Ausführungsbeispiels einer erfindungsgemäßen Heißgetränkezubereitungsvorrichtung.

In den Ausführungsbeispielen und Figuren können gleiche oder gleich wirkende Bestandteile jeweils mit den gleichen Bezugszeichen versehen sein. Die dargestellten Bestandteile und deren Größenverhältnisse zueinander sind grundsätzlich nicht als maßstabsgerecht anzusehen. Vielmehr können einzelne Elemente wie beispielsweise Schichten, Teile, Elemente, Komponenten und Bereiche zur besseren Darstellbarkeit und/oder zum besseren Verständnis übertrieben dick oder groß dimensioniert dargestellt sein.

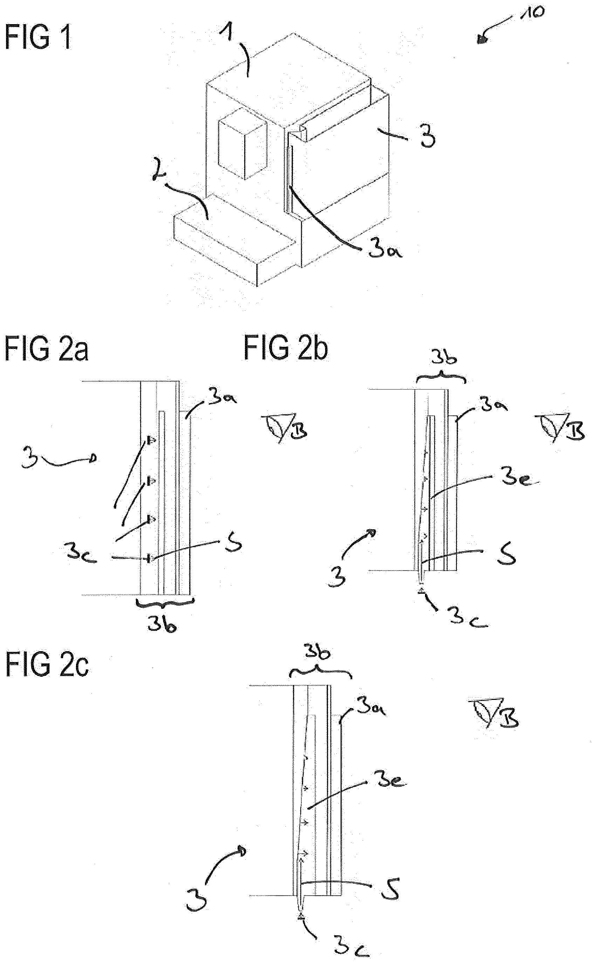

Figur 1 zeigt eine erfindungsgemäße Heißgetränkezubereitungsvorrichtung 10, insbesondere einen Kaffeevollautomaten. Dieser umfasst ein Gehäuse 1 mit darin eingebauten Komponenten, die zur Kaffeezubereitung notwendig sind wie beispielsweise ein Mahlwerk und/oder eine Brüheinheit (nicht dargestellt). Weiter weist die Heißgetränkezubereitungsvorrichtung 10 ein Tassen-Abstellpodest 2 auf, um darauf die zu füllenden Tassen zur Tassenfüllung abzustellen. Zudem ist ein Flüssigkeitsbehälter 3 seitlich an der Heißgetränkezubereitungsvorrichtung 10 angeordnet. Alternativ ist natürlich möglich, dass der Flüssigkeitsbehälter 3 an einer Rückseite an der Heißgetränkezubereitungsvorrichtung 10 angeordnet ist (nicht gezeigt)

Der Flüssigkeitsbehälter 3 ist beispielsweise ein Wassertank, der zur Zubereitung des Kaffees vom Benutzer/Anwender mit Wasser zu füllen ist. Alternativ ist natürlich denkbar, dass der Flüssigkeitsbehälter 3 ein Milchtank oder ein Tank für Sirup oder Getränkekonzentrat ist.

Der Flüssigkeitsbehälter 3 weist eine Füllstandsanzeige zum Anzeigen des Füllstands im Flüssigkeitsbehälter mit einem Anzeigebereich 3a auf. Die Füllstandsanzeige mit all ihre Komponenten sind im Folgenden in den nachfolgenden Figuren näher erläutert.

Figur 2a stellt eine Ansicht des Flüssigkeitsbehälters 3 der Heißgetränkezubereitungsvorrichtung der Figur 1 von links ohne Grundgerät dar. Eine Füllstandsanzeige 3b des Flüssigkeitsbehälters 3 umfasst eine Mehrzahl von Lichtquellen 3c, die jeweils geeignet sind, Strahlung S einer gewünschten Wellenlänge auszusenden. Diese Lichtquellen 3c sind beispielsweise LEDs, RGB-LEDs oder RGB(W)-LEDs. Die Lichtquellen 3c sind im Grundgerät der Heißgetränkezubereitungsvorrichtung benachbart zu dem Flüssigkeitsbehälter 3 vorzugsweise gleichmäßig angeordnet beziehungsweise verbaut und geben ihre Strahlung S direkt und unmittelbar, insbesondere ohne Verwendung eines Lichtleiters, in den Flüssigkeitsbehälter 3 ab.

Alternativ ist natürlich denkbar, dass die Lichtquellen 3c ihre Strahlung S mittelbar über einen Lichtleiter zum gezielten Führen der Strahlung S in den Flüssigkeitsbehälter 3 abgeben (nicht dargestellt).

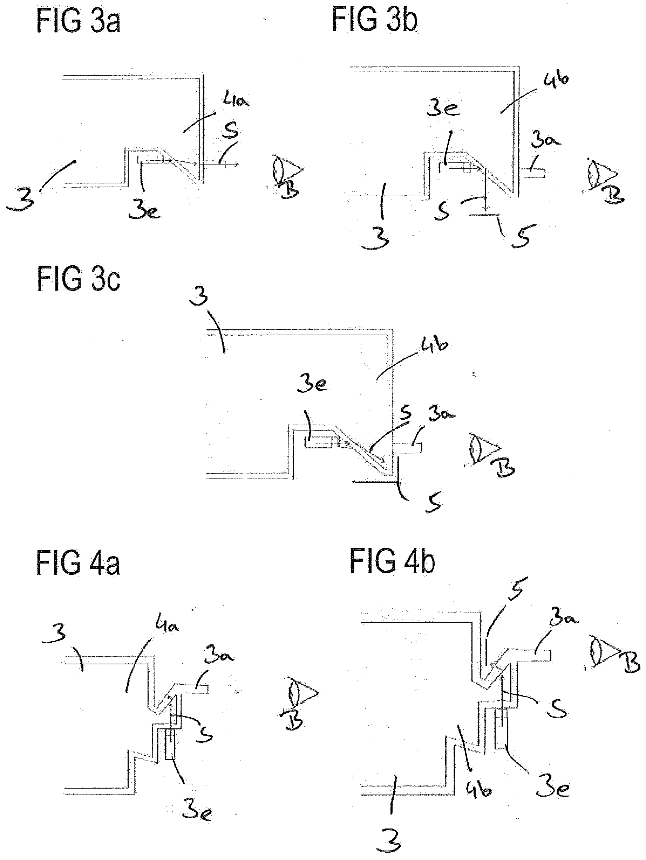

Der Flüssigkeitsbehälter 3 weist weiter den für den Benutzer/Anwender B sichtbaren Anzeigebereich 3a auf, zu dem bei vorhandener Flüssigkeit im Flüssigkeitsbehälter 3 die ausgesendete Strahlung S hin leitbar ist, und von der bei fehlender Flüssigkeit im Flüssigkeitsbehälter 3 die ausgesendete Strahlung S weg leitbar ist. Dabei basiert das hin- beziehungsweise weg-Leiten der Strahlung S auf unterschiedlichen Brechungsindizes von der Flüssigkeit und von Luft. Dies wird nachfolgend in Verbindung mit den Figuren 3, 4 und 5 näher erläutert.

Figur 2B zeigt eine alternative Ausgestaltung der Füllstandsanzeige 3b. Hierbei ist ein Lichtleiter 3e vorhanden, in den die von einer einzigen Lichtquelle 3c ausgesendete Strahlung S einkoppelt. Im Unterschied zu dem Ausführungsbeispiel der Figur 2A findet hier also nur die eine Lichtquelle 3c Verwendung, deren emittierte Strahlung S über den Lichtleiter 3e in den Flüssigkeitsbehälter 3 eingekoppelt wird. Dabei wird die Strahlung S gerichtet in den Flüssigkeitsbehälter 3 abgegeben. Der Lichtleiter 3e ist dabei als separate

Komponenten in Bezug auf den Flüssigkeitsbehälter 3 ausgebildet. Das bedeutet, dass der Lichtleiter 3e und der Flüssigkeitsbehälter zumindest zweistückig sind.

Im Unterschied hierzu zeigt Figur 2C eine Ausgestaltung, bei der der Lichtleiter 3e in den Flüssigkeitsbehälter 3 integriert ist. Insbesondere weist der Flüssigkeitsbehälter 3 im Bereich der Lichtquelle 3c eine Lichtführung auf, die die Strahlung S gerichtet in den Flüssigkeitsbehälter 3 abgibt. Die Lichtführung und der Flüssigkeitsbehälter 3 sind dabei also einstückig ausgebildet. Eine separate Lichtleitung ist somit mit Vorteil nicht notwendig, da eine gerichtete Lichtführung bereist mit der geometrischen Ausgestaltung des Flüssigkeitsbehälters 3 realisiert wird.

Figur 3A zeigt eine Ansicht von oben auf den Flüssigkeitsbehälter 3 mit angebrachten Lichtleiter 3e. Die Lichtquelle beziehungsweise Lichtquellen sind in dieser Ansicht nicht zu sehen. Die von der Lichtquelle emittierte Strahlung S wird in dem Lichtleiter 3e zum Flüssigkeitsbehälter 3 geleitet und dort aufgrund der Brechungsindex-Unterschiede an der Grenzfläche Lichtleiter 3e und Flüssigkeitsbehälter 3 und/oder Flüssigkeitsbehälter 3 und vorhandene Flüssigkeit 4a, also insbesondere an einer Einkoppelfläche, wie erwünscht beziehungsweise vorbestimmt gebrochen. An der im Strahlungsweg angeordneten weiteren Grenzfläche zwischen der vorhandenen Flüssigkeit 4a und dem Flüssigkeitsbehälter 3, insbesondere an der Austrittsfläche der Strahlung S aus dem Flüssigkeitsbehälter 3, wird die Strahlung nochmals wie vorbestimmt beziehungsweise gewünscht in Richtung Anzeigebereich 3a gebrochen, sodass der Anwender/Benutzer B dort bei vorhandener Flüssigkeit 4a im Flüssigkeitsbehälter 3 die gebrochene Strahlung S wahrnehmen und so Rückschlüsse über das Vorhandensein der Flüssigkeit 4a im Flüssigkeitsbehälter 3 ziehen kann. Insgesamt durchdringt die Strahlung S den Flüssigkeitsbehälter 3, beziehungsweise dessen Wände und/oder dessen Material, also zweimal.

Figur 3A stellt also den Strahlengang der emittierten Strahlung S bei vorhandener Flüssigkeit 4a im Flüssigkeitsbehälter 3 dar. Figur 3B zeigt eine Ausgestaltung des Flüssigkeitsbehälters 3 und des Lichtleiters 3e der Figur 3A bei einem Nicht-vorhanden-Sein von Flüssigkeit im Flüssigkeitsbehälter 3.

An der Einkoppelfläche, also insbesondere an der Grenzfläche zwischen Flüssigkeitsbehälter 3 und Luft 4b im Flüssigkeitsbehälter 3, wird die von der Lichtquelle emittierte Strahlung S aufgrund der Brechungsindex-Unterschiede totalreflektiert, sodass diese totalreflektierte Strahlung nicht in den Anzeigebereich 3a geleitet beziehungsweise gelenkt wird, sondern in einen für den Benutzer B nicht einsehbaren, zum Lichtleiter 3e benachbarten Bereich 5, einer sogenannten Lichtfalle. Insgesamt durchdringt die Strahlung S den Flüssigkeitsbehälter 3, beziehungsweise dessen Wand und/oder dessen Material, hierbei einmal, bevor die Strahlung S in die Lichtfalle geleitet wird

Im Falle des leeren Flüssigkeitsbehälters 3 ist die Strahlung dem Benutzer B also nicht einsehbar. Mit dieser Information kann der Benutzer B Rückschlüsse zum Befüllungszustand des Flüssigkeitsbehälters 3 ziehen und entsprechend Wasser oder gewünschte Flüssigkeit in den Flüssigkeitsbehälter 3 nachfüllen.

Figur 3C zeigt eine alternative Lichtleitung bei Nicht-vorhandener Flüssigkeit im Flüssigkeitsbehälter 3, also bei Luft 4b im Flüssigkeitsbehälter 3. Hier wird die Strahlung S an der Einkoppelfläche nicht totalreflektiert, sondern lediglich entsprechend abgelenkt, sodass diese abgelenkte Strahlung S wiederum nicht in den Anzeigebereich 3a geleitet und damit nicht für den Benutzer B sichtbar wird. Die Strahlung wird wiederum in einen für den Benutzer B nicht einsehbaren, zum Lichtleiter 3e benachbarten Bereich 5 gelenkt, insbesondere in die sogenannte Lichtfalle. Rückschlüsse über den Befüllungszustand des Flüssigkeitsbehälters 3 lassen sich so wiederum ziehen. Insgesamt durchdringt die Strahlung S den Flüssigkeitsbehälter 3, beziehungsweise dessen Wände und/oder dessen Material, hierbei zweimal.

Um eine wie gewünschte Ablenkung beziehungsweise Totalreflektion der Strahlung S im Nicht-befüllten Zustand des Flüssigkeitsbehälters 3, und eine in den Anzeigebereich 3a hin gelenkte Brechung der Strahlung im befüllten Zustand des Flüssigkeitsbehälters 3 zu erreichen, ist der Lichtleiter 3e entsprechend an dem Flüssigkeitsbehälters 3 angeordnet. Zudem ist der Bereich des Flüssigkeitsbehälters 3, insbesondere dessen Grenzflächen geometrisch entsprechend geformt. Bei der Ausgestaltung der Figuren 3A bis 3C ist die Einkoppelfläche schräg zum Lichtleiter 3e angeordnet, während der Lichtleiter 3e zur Auskoppelfläche in Richtung Anzeigebereich 3a senkrecht ausgebildet ist. Der Flüssigkeitsbehälter 3 weist also eine Ausbuchtung für den Lichtleiter 3e mit zumindest einer hierzu schräg angeordneten Wand auf. Der Lichtleiter 3e ist dabei bis auf eine Seite von Wänden des Flüssigkeitsbehälters 3 umgeben beziehungsweise umrundet und von diesen eingeschlossen.

Figur 4A zeigt eine alternative Ausgestaltung zu einem Flüssigkeitsbehälter 3, in dem Flüssigkeit 4a vorhanden ist, und der einen separaten Lichtleiter 3e umfasst. An einer Einkoppelfläche des Flüssigkeitsbehälters 3 wird Strahlung S aus dem Lichtleiter 3e in die Flüssigkeit 4a ungebrochen und/oder nicht-abgelenkt beziehungsweise nicht-reflektiert abgegeben.

Alternativ ist natürlich denkbar, dass die Strahlung an der Einkoppelfläche gezielt abgelenkt beziehungsweise gebündelt wird (nicht dargestellt).

An einer Auskoppelfläche, insbesondere an der Grenzfläche zwischen Flüssigkeit 4a und Material beziehungsweise Wand des Flüssigkeitsbehälters 3, wird die Strahlung zu einer zweiten Grenzfläche zwischen Material beziehungsweise Wand des Flüssigkeitsbehälters 3 und Umgebungsmaterie des Flüssigkeitsbehälters 3, insbesondere Luft, hin gebrochen. An dieser zweiten Grenzfläche wird die Strahlung S totalreflektiert in Richtung Anzeigebereich 3a, sodass für den Benutzer B dort diese Strahlung S sichtbar ist.

Im Falle des Nicht-Vorhandenseins von Flüssigkeit im Flüssigkeitsbehälter, also von Luft 4b im Flüssigkeitsbehälter 3, wie es in Figur 4B dargestellt ist, wird die Strahlung S an der Grenzfläche zwischen Luft 4b und Material beziehungsweise Wand des Flüssigkeitsbehälters 3 in einem anderen Winkel derart gebrochen, dass an der zweiten Grenzfläche zwischen Material beziehungsweise Wand des Flüssigkeitsbehälters 3 und Umgebungsmaterie des Flüssigkeitsbehälters 3 die Strahlung S nicht totalreflektiert wird, sondern lediglich abgelenkt beziehungsweise ungebrochen durch diese zweite Grenzfläche hindurchtritt und so in einen benachbarten, für den Benutzer B insbesondere nicht sichtbaren Bereich 5 gelangt, also wiederum die sogenannte Lichtfalle erreicht.

Um eine wie in den Figuren 4A, 4B erläuterte Lichteitung zu erzielen, weist der Flüssigkeitsbehälter 3 eine entsprechende geometrische Ausgestaltung auf. Insbesondere ist der Lichtleiter 3e vor einer Ausbuchtung, insbesondere vor einer zum Lichtleiter 3e senkrecht angeordneten Einkoppelfläche des Flüssigkeitsbehälters 3 angeordnet. Die vorgesehene Auskoppelfläche des Flüssigkeitsbehälters 3 ist schräg beziehungsweise in einem Winkel zum Strahlengang im Flüssigkeitsbehälter 3 ausgerichtet, sodass im Falle von vorhandener Flüssigkeit eine Totalreflektion an der zweiten Grenzfläche und im Falle von vorhandener Luft gerade keine Totalreflektion an der zweiten Grenzfläche möglich ist. In beiden Fällen durchdringt die Strahlung den Flüssigkeitsbehälter 3, beziehungsweise dessen Wände und/oder dessen Material, zweimal.

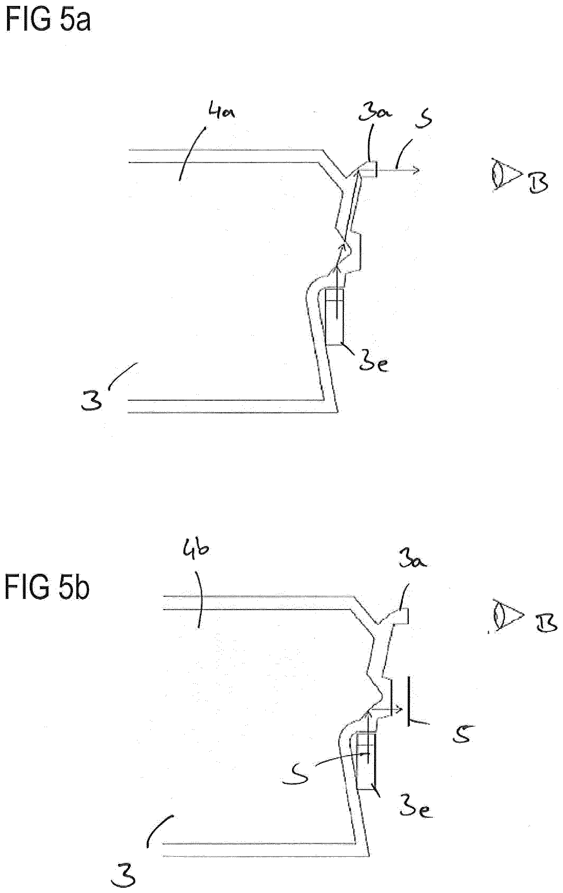

Figur 5A zeigt eine weitere alternative Ausführungsform einer Lichtleitung bei vorhandener Flüssigkeit 4a im Flüssigkeitsbehälter 3. Der als separate Komponente ausgebildete Lichtleiter 3e ist wie in den Ausführungsbeispielen zuvor vor einer Einkoppelfläche einer von einer Lichtquelle emittierten Strahlung S angeordnet und koppelt dort in den Flüssigkeitsbehälter 3 ein. Bei einem Übergang beziehungsweise einer Grenzfläche zwischen Material beziehungsweise Wand des Flüssigkeitsbehälters 3 und vorhandener Flüssigkeit 4a im Flüssigkeitsbehälter 3 wird die emittierte Strahlung S entsprechend dem Brechungsgesetz basierend auf den Brechungsindex-Unterschieden zwischen Flüssigkeit 4a und Material des Flüssigkeitsbehälters 3 abgelenkt beziehungsweise gebrochen. An einer weiteren Grenzfläche zwischen Flüssigkeit 4a und Material des Flüssigkeitsbehälters 3, die im Strahlengang liegt, wird die emittierte Strahlung S ein zweites Mal entsprechend dem Brechungsgesetz basierend auf den Brechungsindex-Unterschieden zwischen Flüssigkeit 4a und Material des Flüssigkeitsbehälters 3 abgelenkt beziehungsweise gebrochen und in einer Wand des Flüssigkeitsbehälters 3 ähnlich wie in einem Lichtleiter geführt beziehungsweise geleitet. An einer weiteren Grenzfläche zwischen Material des Flüssigkeitsbehälters 3 und Umgebungsluft, insbesondere Luft, die den Flüssigkeitsbehälter 3 umgibt, wird die Strahlung S in Richtung Anzeigebereich 3a totalreflektiert und/oder umgelenkt, sodass der Benutzer B bei vorhandener Flüssigkeit 4a diese Strahlung S sieht und entsprechend ein Signal bezüglich des Vorhanden-Seins der Flüssigkeit 4a erhält.

Figur 5B stellt den Strahlengang bei nicht-vorhandener Flüssigkeit im Flüssigkeitsbehälter 3, also bei Luft 4b im Flüssigkeitsbehälter 3, dar. Bereits an der ersten Grenzfläche zwischen Material beziehungsweise Wand des Flüssigkeitsbehälters 3 und vorhandener Luft 4b im Flüssigkeitsbehälter 3 wird die emittierte Strahlung S entsprechend dem Brechungsgesetz basierend auf den Brechungsindex-Unterschieden zwischen Luft 4b und Material des Flüssigkeitsbehälters 3 abgelenkt beziehungsweise gebrochen. Hierbei wird die Strahlung S in eine sogenannte Lichtfalle hin gebrochen und/oder totalreflektiert. Diese Lichtfalle entspricht einen für den Benutzer B nicht sichtbaren Bereich 5, sodass bei Luft im Flüssigkeitsbehälter 3 der Benutzer B gerade kein Lichtsignal empfängt. Hier signalisiert das nicht-vorhanden-Sein des Lichts oder der Strahlung das nicht-vorhanden-Sein von Flüssigkeit im Flüssigkeitsbehälter 3.

Um einen wie zu den Figuren 5A, 5B beschriebenen Strahlengang zu erzielen, ist der Flüssigkeitsbehälter 3 bezüglich seiner geometrischen Form entsprechend ausgebildet. Insbesondere weist der Flüssigkeitsbehälter 3 benachbart und senkrecht zur Einkoppelfläche und zum Lichtleiter 3e eine Ausbuchtung für Flüssigkeit und/oder Luft im Flüssigkeitsbehälter 3 auf, sodass die vom Lichtleiter 3e emittierte Strahlung S - im Falle einer fehlenden Brechung - das Material beziehungsweise die Wand des Flüssigkeitsbehälters 3 zumindest zweimal trifft beziehungsweise durchdringt. Im Anschluss an diese Ausbuchtung ist eine parallel zum Strahlengang und zum Lichtleiter 3e führende Wand des Flüssigkeitsbehälters 3 ausgebildet der bei vorhandener Strahlung S, also bei vorhandener Flüssigkeit, als weiterer Lichtleiter beziehungsweise Lichtführung fungiert. In einem Winkel hierzu ist die Auskoppelfläche der Strahlung S angeordnet, die den Anzeigebereich 3a für den Benutzer B wiedergibt.

## Patentansprüche

1. Heißgetränkezubereitungsvorrichtung (10), insbesondere Kaffeevollautomat, mit zumindest einem Flüssigkeitsbehälter (3) und mit einer Füllstandsanzeige (3b) zum Anzeigen des Füllstands im Flüssigkeitsbehälter (3), wobei die Füllstandsanzeige (3b) zumindest eine Lichtquelle (3c) umfasst, die geeignet ist, Strahlung (S) einer gewünschten Wellenlänge auszusenden, und einen Anzeigebereich (3a) aufweist, zu dem bei vorhandener Flüssigkeit (4a) im Flüssigkeitsbehälter (3) die ausgesendete Strahlung (S) hin leitbar ist, und von der bei fehlender Flüssigkeit (4a) im Flüssigkeitsbehälter (3) die ausgesendete Strahlung (S) weg leitbar ist, wobei das hinbeziehungsweise weg-Leiten der Strahlung (S) basiert auf unterschiedlichen Brechungsindizes von der Flüssigkeit (4a) und von Luft (4b), und wobei der Anzeigebereich (3a), insbesondere das Anzeigen des Füllstands im Flüssigkeitsbehälter (3), sensorlos betreibbar ist, **dadurch gekennzeichnet, dass** die Lichtquelle (3c) neben dem Füllstand des Flüssigkeitsbehälters (3) zumindest eine zusätzliche Information vermittelt, und das Auswerten des Füllstands und der zusätzlichen Information mit dem bloßen Auge des Benutzers erfolgt.

2. Heißgetränkezubereitungsvorrichtung nach Anspruch 1, **dadurch gekennzeichnet, dass**
das Anzeigen des Füllstands im Flüssigkeitsbehälter (3) auf einem ausschließlich optischen Verfahren basiert.

3. Heißgetränkezubereitungsvorrichtung nach einem der vorhergehenden Ansprüche, **dadurch gekennzeichnet, dass**
die von der Lichtquelle (3c) ausgesendete Strahlung (S) in ein Material des Flüssigkeitsbehälters (3) eintritt, und bei einem Übergang von dem Material des Flüssigkeitsbehälters (3) zur Flüssigkeit (4a) beziehungsweise zu Luft (4b) entsprechend des jeweiligen Brechungsindex vorbestimmt unterschiedlich brechbar ist.

4. Heißgetränkezubereitungsvorrichtung nach Anspruch 3, **dadurch gekennzeichnet, dass**
bei dem Übergang von dem Material des Flüssigkeitsbehälters (3) zur Flüssigkeit (4a) die Strahlung (S) zum Anzeigebereich (3a) hin gebrochen wird.

5. Heißgetränkezubereitungsvorrichtung nach Anspruch 3 oder 4, **dadurch gekennzeichnet, dass**
bei dem Übergang von dem Material des Flüssigkeitsbehälters (3) zu Luft (4b) die Strahlung (S) vom Anzeigebereich (3a) weg gebrochen und/oder vollständig reflektiert wird.

6. Heißgetränkezubereitungsvorrichtung nach einem der vorhergehenden Ansprüche, **dadurch gekennzeichnet, dass**
der Anzeigebereich (3a) für einen Benutzer (B) zur Auswertung sichtbar und/oder einsehbar ist.

7. Heißgetränkezubereitungsvorrichtung nach einem der vorhergehenden Ansprüche, **dadurch gekennzeichnet, dass**
die zumindest eine Lichtquelle (3c) ihre Strahlung (S) direkt und/oder unmittelbar in den Flüssigkeitsbehälter (3) abgibt.

8. Heißgetränkezubereitungsvorrichtung nach einem der vorhergehenden Ansprüche 1 bis 6, **dadurch gekennzeichnet, dass**
die zumindest eine Lichtquelle (3c) ihre Strahlung (S) indirekt über einen Lichtleiter (3e) in den Flüssigkeitsbehälter (3) abgibt.

9. Heißgetränkezubereitungsvorrichtung nach einem der vorhergehenden Ansprüche, **dadurch gekennzeichnet, dass**
der Lichtleiter (3e) und/oder der Flüssigkeitsbehälter (3) zumindest bereichsweise eine Sägezahngeometrie aufweisen.

## Claims

1. Hot beverage preparation apparatus (10), in particular fully automated coffee machine, with at least one liquid container (3) and with a fill level indicator (3b) for indicating the fill level in the liquid container (3), wherein the fill level indicator (3b) comprises at least one light source (3c), which is suitable for emitting radiation (S) of a desired wavelength, and has an indication region (3a), towards which the emitted radiation (S) can be conducted when liquid (4a) is present in the liquid container (3), and away from which the emitted radiation (S) can be conducted when liquid (4a) is not present in the liquid container (3), wherein the conducting of the radiation (S) towards or away is based on different calculation indices of the liquid (4a) and of air (4b), and wherein the indication region (3a), in particular the indication of the fill level in the liquid container (3), can be operated without sensors, **characterised in that** the light source (3c), in addition to the fill level of the liquid container (3), communicates at least one additional item of information, and the evaluation of the fill level and the additional information takes place with the naked eye of the user.

2. Hot beverage preparation apparatus according to claim 1, **characterised in that** the indication of the fill level in the liquid container (3) is based on an exclusively optical method.

3. Hot beverage preparation apparatus according to one of the preceding claims, **characterised in that**
the radiation (S) emitted by the light source (3c) enters a material of the liquid container (3) and, on a transition from the material of the liquid container (3) to the liquid (4a) or to air (4b), the respective index of refraction may refract differently in a predetermined manner accordingly.

4. Hot beverage preparation apparatus according to claim 3, **characterised in that** on the transition from the material of the liquid container (3) to the liquid (4a), the radiation (S) is refracted towards the indication region (3a).

5. Hot beverage preparation apparatus according to claim 3 or 4, **characterised in that** on the transition from the material of the liquid container (3) to air (4b), the radiation (S) is refracted away from the indication region (3a) and/or is reflected completely.

6. Hot beverage preparation apparatus according to one of the preceding claims, **characterised in that**
the indication region (3a) can be seen and/or consulted by a user (B) for the purpose of evaluation.

7. Hot beverage preparation apparatus according to one of the preceding claims, **characterised in that**
the at least one light source (3c) releases its radiation (S) into the liquid container (3) directly and/or indirectly.

8. Hot beverage preparation apparatus according to one of the preceding claims 1 to 6, **characterised in that**
the at least one light source (3c) releases its radiation (S) into the liquid container (3) indirectly via a light conductor (3e).

9. Hot beverage preparation apparatus according to one of the preceding claims, **characterised in that**
the light conductor (3e) and/or the liquid container (3) have a sawtooth geometry, at least in regions.

## Revendications

1. Dispositif de préparation de boissons chaudes (10), plus particulièrement machine à café automatique, avec au moins un réservoir de liquide (3) et avec une jauge de niveau (3b) pour indiquer le niveau dans le réservoir de liquide (3), dans lequel la jauge de niveau (3b) comprend au moins une source lumineuse (3c) qui est appropriée pour émettre un rayonnement (S) d'une longueur d'onde souhaitée, et présente une zone d'affichage (3a), vers laquelle peut être guidé le rayonnement (S) émis en cas de liquide (4a) présent dans le réservoir de liquide (3), et à distance de laquelle peut être guidé le rayonnement (S) émis en cas de liquide (4a) absent dans le réservoir de liquide (3), dans lequel le guidage vers ou à distance du rayonnement (S) se base sur différents indices de réfraction du liquide (4a) et de l'air (4b), et dans lequel la zone d'affichage (3a), plus particulièrement l'affichage du niveau dans le réservoir de liquide (3) peut être effectué sans capteur, **caractérisé en ce que** la source lumineuse (3c) transmet en plus du niveau du réservoir de liquide (3) au moins une information supplémentaire, et l'évaluation du niveau et de l'information supplémentaire se fait à l'œil nu de l'utilisateur.

2. Dispositif de préparation de boissons chaudes selon la revendication 1, **caractérisé en ce que** l'affichage du niveau dans le réservoir de liquide (3) se base sur un procédé exclusivement optique.

3. Dispositif de préparation de boissons chaudes selon l'une des revendications précédentes, **caractérisé en ce que** le rayonnement (S) émis par la source lumineuse (3c) pénètre dans un matériau du réservoir de liquide (3), et peut être réfracté différemment d'une manière prédéterminée lors d'une transition du matériau du réservoir de liquide (3) au liquide (4a) respectivement à l'air (4b) selon l'indice de réfraction respectif.

4. Dispositif de préparation de boissons chaudes selon la revendication 3, **caractérisé en ce que** lors de la transition du matériau du réservoir de liquide (3) au liquide (4a), le rayonnement (S) est réfracté vers la zone d'affichage (3a).

5. Dispositif de préparation de boissons chaudes selon la revendication 3 ou 4, **caractérisé en ce que** lors de la transition du matériau du réservoir de liquide (3) à l'air (4b), le rayonnement (S) est réfracté à distance de la zone d'affichage (3a) et/ou est intégralement réfléchi.

6. Dispositif de préparation de boissons chaudes selon l'une des revendications précédentes, **caractérisé en ce que** la zone d'affichage (3a) est visible et/ou reconnaissable aux fins d'évaluation par un utilisateur (B).

7. Dispositif de préparation de boissons chaudes selon l'une des revendications précédentes, **caractérisé en ce que** la au moins une source lumineuse (3c) émet son rayonnement (S) directement et/ou indirectement dans le réservoir de liquide (3).

8. Dispositif de préparation de boissons chaudes selon l'une des revendications précédentes 1 à 6, **caractérisé en ce que** la au moins une source lumineuse (3c) émet son rayonnement (S) indirectement par un guide de lumière (3e) dans le réservoir de liquide (3).

9. Dispositif de préparation de boissons chaudes selon l'une des revendications précédentes, **caractérisé en ce que** le guide de lumière (3e) et/ou le réservoir de liquide (3) présentent au moins par endroits une géométrie en dents de scie.
